# FASCICULE DE BREVET EUROPEEN

(11) **EP 2 721 683 B1**
(45) Date de publication et mention de la délivrance du brevet: **29.07.2015**
(21) Numéro de dépôt: 12731524.0
(22) Date de dépôt: 13.06.2012
(51) Int. Cl.: H01M 10/0569, H01M 10/0525, H01M 4/58, H01M 4/587

(54) **ELECTROLYTE LIQUIDE POUR ACCUMULATEUR AU LITHIUM, COMPRENANT UN MÉLANGE TERNAIRE DE SOLVANTS ORGANIQUES NON-AQUEUX**
FLÜSSIGER ELEKTROLYT FÜR LITHIUM-AKKUMULATOR UMFASSEND EINE TERNÄRE MISCHUNG AUS NICHT-WÄSSRIGEN ORGANISCHEN LÖSUNGSMITTELN
LIQUID ELECTROLYTE FOR LITHIUM ACCUMULATOR, COMPRISING A TERNARY MIXTURE OF NON-AQUEOUS ORGANIC SOLVENTS

(30) Priorité: 14.06.2011 FR 1101812
(43) Date de publication de la demande: 23.04.2014
(73) Titulaire: Commissariat à l'Énergie Atomique et aux Énergies Alternatives, 75015 Paris (FR)
(72) Inventeur: GIROUD, Nelly, F-42100 Saint Etienne (FR); ROUAULT, Hélène, F-38420 Le Versoud (FR)
(74) Mandataire: Talbot, Alexandre
(86) Numéro de dépôt international: PCT/FR2012/000242
(87) Numéro de publication internationale: WO 2012/172195

(56) Documents cités:
- EP-A1- 2 320 501
- EP-A2- 1 528 617
- JP-A- 2002 110 147
- US-A1- 2002 192 565
- US-A1- 2006 234 131
- T.R. JOW ET AL.: "Nonaqueous electrolytes for wide-temperature-range operation of Li-ion cells", JOURNAL OF POWER SOURCES, vol. 119-121, 1 juin 2003 (2003-06-01), pages 343-348, XP004430193, ISSN: 0378-7753, DOI: 10.1016/S0378-7753(03)00153-8

## Description

### Domaine technique de l'invention

L'invention concerne un électrolyte liquide pour accumulateur au lithium comprenant au moins un sel de lithium dissous dans un mélange de solvants organiques non aqueux.

### État de la technique

De manière générale, le domaine technique de l'invention peut être défini comme celui de la formulation des électrolytes, et plus précisément comme celui de la formulation des électrolytes liquides, c'est-à-dire des solutions comprenant un solvant liquide organique et un soluté tel qu'un sel conducteur, où des mécanismes de conduction ionique sont mis en jeu.

Les accumulateurs au lithium sont généralement constitués par une cellule électrochimique ou un empilement de cellules électrochimiques dans un emballage. Chaque cellule électrochimique est formée par une électrode positive et une électrode négative séparées par un électrolyte.

Les accumulateurs au lithium fonctionnent sur le principe d'insertion ou de désinsertion (ou intercalation-désintercalation) du lithium dans au moins un des matériaux actifs d'électrodes le plus souvent le matériau actif de l'électrode positive. En général, le matériau actif de l'électrode positive est un oxyde de lithium et d'au moins un métal de transition, tel que LiCoO₂, LiNiO₂ et LiMn₂O₄. Plus récemment, il a été proposé d'utiliser le composé LiFePO₄ comme matériau actif pour l'électrode positive.

Le matériau actif de l'électrode négative peut être soit du lithium métallique ou un alliage à base de lithium (accumulateur de type Li-Métal), soit, comme pour le matériau actif de l'électrode positive, un matériau apte à insérer et désinsérer des ions Li⁺. On parle alors d'accumulateur de type Li-Ion.

Pour un accumulateur Li-Ion, le matériau actif de l'électrode négative est, en général, à base de matériau carboné, tel que du graphite.

D'autres matériaux peuvent néanmoins être envisagés pour former le matériau actif de l'électrode négative, comme par exemple, des titanates de lithium.

Les collecteurs de courant qui permettent la circulation des électrons, et donc la conduction électronique, dans le circuit extérieur de l'accumulateur au lithium sont, généralement, en cuivre pour l'électrode négative, ou en aluminium pour l'électrode positive.

En outre, les accumulateurs au lithium, conventionnels comportent un séparateur imprégné par l'électrolyte liquide disposé entre les électrodes positive et négative. Le séparateur empêche tout court-circuit en évitant la mise en contact de l'électrode positive avec l'électrode négative.

Les électrolytes employés dans les accumulateurs au lithium ion actuels sont des électrolytes liquides constitués d'un mélange de solvants organiques, non aqueux, le plus souvent des carbonates, dans lequel est dissout un sel de lithium.

La formulation de l'électrolyte utilisé revêt un caractère essentiel pour la performance des accumulateurs au lithium, en particulier lorsque ceux-ci sont utilisés à des températures très basses ou très élevées. La conductivité de l'électrolyte conditionne notamment les performances de l'accumulateur au lithium car elle intervient sur la mobilité des ions lithium au sein de l'électrolyte entre les électrodes positive et négative.

D'autres paramètres interviennent également dans le choix du type d'électrolyte utilisé dans un accumulateur au lithium. Il s'agit notamment de sa stabilité thermique, chimique et électrochimique au sein de l'accumulateur ainsi que des critères économiques, de sécurité et de respect de l'environnement incluant notamment la toxicité de l'électrolyte liquide.

À l'heure actuelle, les électrolytes d'accumulateur au lithium fonctionnent sur une plage de température réduite, comprise classiquement entre -10°C et 50°C, sans être endommagés. Au-delà de cette plage de température, l'électrolyte se dégrade et entraîne une détérioration significative des performances de l'accumulateur au lithium.

De nombreux travaux ont été décrits pour proposer d'élargir la plage de fonctionnement des accumulateurs au lithium, en particulier, en modifiant la formulation de l'électrolyte.

Ainsi, il a été montré que l'utilisation de solvants tels que les esters simples, les diesters ou les carbonates améliore significativement les performances de l'accumulateur au lithium à haute ou basse température.

Le tableau représenté ci-dessous regroupe, les principaux solvants utilisés dans les accumulateurs au lithium ainsi que leurs propriétés physico-chimiques. Les données répertoriées dans ce tableau sont issues de la littérature, en particulier, des publications Vincent 2000 : C.A. Vincent, Solid State Ionics, 134, 159 (2000) ; Hayashi 1999 : K. Hayashi, Y. Nemoto, S.-I. Tobishima, J.-I. Yamachi, Electrochimica Acta, 44, 2337 (1999) ; Smart 1999 : M.C. Smart, B.V. Ratnakumar, S. Surampudi, J. Electrochem. Soc., 146 (2), 486 (1999) et Xu 2004 : K. Xu, Chem. Rev., 104, 4303 (2004).

| Solvant | Structure | M g.mol^{- 1} | T*ₘ* (°C) | *T_{b}* (°C) | T*_{f}* (°C) | *η* (cP) | *ε*ᵣ | *µ* (D) | *ρ* (g.cm^{- 3}) |
|---|---|---|---|---|---|---|---|---|---|
| Acétonitrile (AN) | CH₃-CN | | -45,7 | 81,8 | | 0,345 | 38,0 | 3,94 | |
| γ-butyrolactone (GBL) | 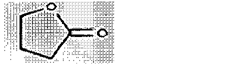 | 86 | -43,5 | 204 | 97 | 1,73 | 39 | 4,23 | 1,199 |
| 1,2-Diméthylether (DMM) | 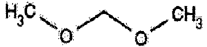 | 76 | -105 | 41 | -17 | 0,33 | 2,7 | 2,41 | 0,86 |
| 1,2-diméthoxyéthane (DME) | 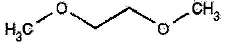 | 90 | -58 | 84 | 0 | 0,46 | 7,2 | 1,15 | 0,86 |
| Diéthoxyéthane (DEE) | 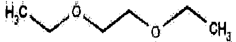 | 118 | -74 | 121 | 20 | 0,224 | 4,3 | 1,18 | 0,84 |
| Tétrahydrofurane (TH F) | 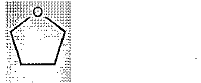 | 72 | 109 | 66 | -17 | 0,46 | 7,4 | 1,7 | 0,88 |
| 1,3-dioxalane (DL) | 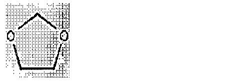 | 74 | -95 | 78 | 1 | 0,59 | 7,1 | 1,25 | 1,06 |
| Carbonate d'éthylène (EC) | 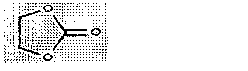 | 88 | 36,4 | 248 | 160 | 1,90 (40°C) | 89,78 | 4,61 | 1,321 |
| Carbonate de propylène (PC) | 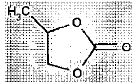 | 102 | -48,8 | 242 | 132 | 2,53 | 64,92 | 4,81 | 1,200 |
| Carbonate de diméthyle (DMC) | 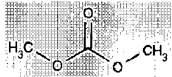 | 90 | 4,6 | 91 | 18 | 0,59 (20°C) | 3,107 | 0,76 | 1,063 |
| Carbonate de diéthyle (DEC) | 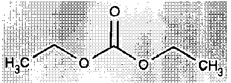 | 118 | -74,3 | 126 | 31 | 0,75 | 2,805 | 0,96 | 0,969 |
| Ethyle méthyle carbonate (EMC) | 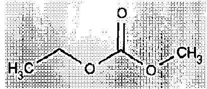 | 104 | -53 | 110 | - | 0,65 | 2,958 | 0,89 | 1,006 |

| | | | | | | | | | |
|---|---|---|---|---|---|---|---|---|---|
| **Propriétés physico-chimiques de solvants à 25°C, M : masse molaire en g.mol⁻¹, T*ₘ* : température de fusion, T*_{b}* : température d'ébullition, T*_{f}* : température flash, εᵣ : permittivité relative, η: viscosité dynamique, µ: moment dipolaire, ρ : masse volumique.** | | | | | | | | | |

A l'heure actuelle, plusieurs documents de l'art antérieur proposent des électrolytes composés d'un mélange de solvants organiques dans lequel est dissous un sel de lithium.

En particulier, le document EP-A-980108 décrit un électrolyte fonctionnent à basse température à base d'un mélange quaternaire de solvant carbonates EC/DMC/EMC/DEC. L'utilisation de cet électrolyte au sein d'un accumulateur au lithium permet son utilisation à une température inférieure à -20°C tout en maintenant de bonnes performances à température ambiante.

D'autres solutions électrolytes non-aqueux, comprenant diverses combinaisons d'esters et de carbonates cycliques, sont décrites dans les brevets US 2006/234131, EP 1528617, US 2002/192565 et dans l'article de Jow et al. (Journal of Power Sources 2003, 119-121, 343-348).
Les brevets EP 2320501 et JP 2002110147 décrivent, en particulier, des mélanges ternaires de solvant PC/GBL/EMC. Les proportions volumiques sont, par exemple, dans le brevet JP 2002110147 de 40 :20 :40.

En outre, on trouve actuellement dans le commerce un électrolyte liquide employé pour les accumulateurs au lithium, notamment, convenant pour une électrode négative en carbone graphite. L'électrolyte liquide commercialisé par la société NOVOLYTE contient près de 2 % en masse de VC et un sel de lithium LiPF6 à une concentration de 1 mol.L⁻¹ dissous dans un mélange ternaire de solvants organiques EC/PC/DMC, avec un rapport volumique respectivement, de 1:1:3.

### Objet de l'invention

L'invention a pour but de proposer un nouvel électrolyte liquide stable thermiquement dans une large gamme de température et son utilisation dans un accumulateur au lithium. L'invention a, en particulier, pour objet un nouvel électrolyte liquide ayant une conductivité ionique élevée, spécialement, à basse température.

L'invention a également pour but un électrolyte liquide apte à activer et maintenir les propriétés électrochimiques d'un accumulateur au lithium dans une large gamme de température, notamment, à une température inférieure ou égale à -40°C.

On tend vers cet objet par les revendications annexées.

### Description sommaire des dessins :

D'autres avantages et caractéristiques ressortiront plus clairement de la description qui va suivre de modes particuliers de réalisation de l'invention donnés à titre d'exemples non limitatifs et représentés aux dessins annexés, dans lesquels :

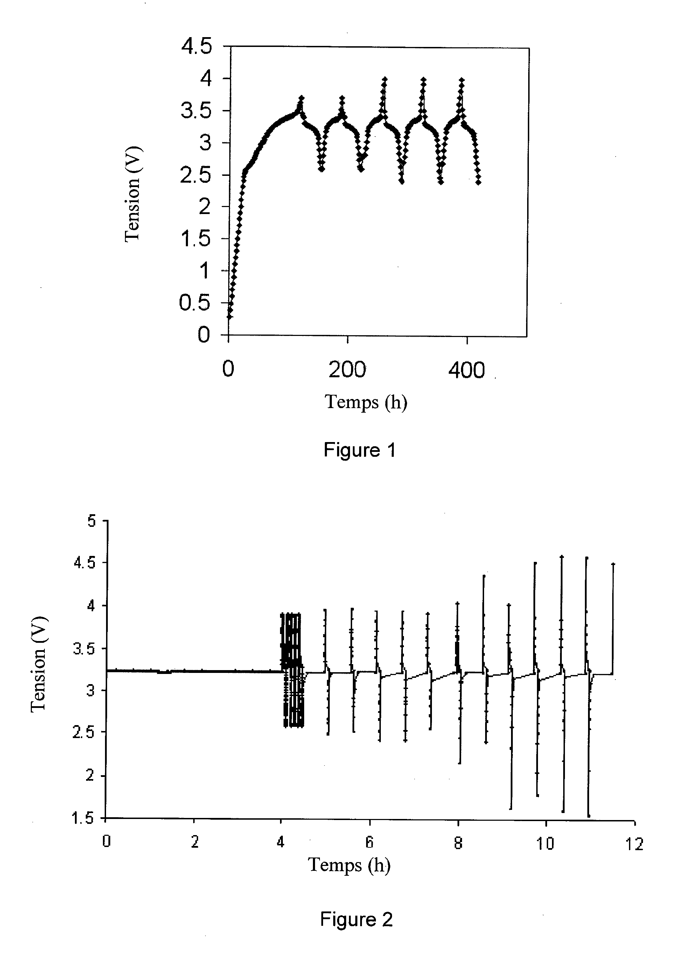

- La figure 1 représente une courbe de cyclage en régime C/20-D/20, à une température de -40°C, d'une pile bouton LiFePO₄// C_{gr} contenant un électrolyte de formulation «PC/GBL/EMC + 2 % massique de VC + 1M LiPF₆ » selon un mode de réalisation particulier de l'invention, le rapport volumique PC/GBL/EMC étant de 1/1/3.
- La figure 2 représente une courbe de cyclage en régime C/20-D/20, à une température de -40°C, d'une pile bouton LiFePO₄// C_{gr} contenant un électrolyte liquide de NOVOLYTE de formulation EC/PC/DMC avec un rapport volumique 1/1/3 + 2% massique de VC + 1 M LiPF₆.

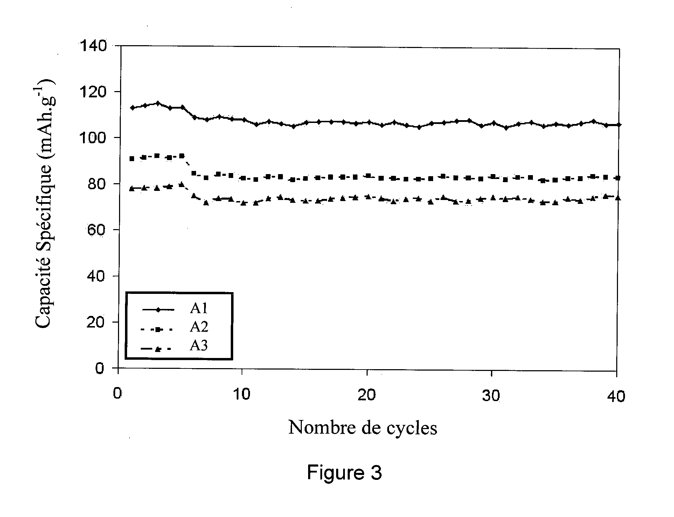

- La figure 3 représente trois courbes de cyclage en régime C/10-D/10, à une température de -40°C, de trois piles bouton LiFePO₄// C_{gr}, notées A1, A2 et A3, réalisées à partir d'un électrolyte de formulation «PC/GBL/EMC + 2 % massique de VC + 1M LiPF_{6 »} selon un mode de réalisation particulier de l'invention, le rapport volumique PC/GBL/EMC étant respectivement de 1/1/3 pour A1, 1/1/2 pour A2 et 1 /1 /1 pour A3.

### Description de modes particuliers de réalisation

Un électrolyte liquide pour accumulateur au lithium comprend au moins un sel de lithium dissous dans un mélange de solvants organiques non aqueux.

Trois solvants organiques non aqueux particuliers ont été choisis pour former le mélange de solvants organiques de l'électrolyte liquide pour accumulateur au lithium. On entend par solvant organique un solvant non aqueux apte à améliorer la conduction ionique de l'électrolyte en favorisant la dissociation des ions formant le sel de lithium.

Le mélange de solvants organiques est constitué par :
- du propylène carbonate, également connu sous l'acronyme anglo-saxon PC,
- du gamma-butyrolactone ou γ-butyrolactone, également connu sous l'acronyme anglo-saxon GBL et,
- de l'éthyle méthyle carbonate, également connu sous l'acronyme anglo-saxon EMC.

Selon l'invention, le mélange de solvants organiques contient entre :
- 0,5% et 33% volumique de propylène carbonate,
- 0,5% et 33% volumique de γ-butyrolactone et,
- 0,5% et 99% volumique d'éthyle méthyle carbonate.

Les solvants organiques utilisés pour réaliser le mélange ternaire de solvants organiques sont des solvants organiques commerciaux qui peuvent contenir jusqu'à 1% d'impuretés. Néanmoins, on choisira de préférence des solvants organiques ayant une pureté supérieure à 99,8%.

La somme des pourcentages volumiques respectifs de propylène carbonate, γ-butyrolactone et éthyle méthyle carbonate dans le mélange est égale à 100%. Ainsi, le mélange de solvants organiques ne comporte pas d'autre(s) solvant(s) que les trois solvants PC, GBL et EMC. Plus particulièrement, il ne comporte pas de carbonate d'éthylène (EC), carbonate de diméthyle (DMC) et carbonate de diéthyle (DEC) comme dans les exemples de mélanges de solvants divulgués selon l'art antérieur.

Le mélange de solvants organiques est, avantageusement, constitué par du propylène carbonate (PC), de γ-butyrolactone (GBL) et de l'éthyle méthyle carbonate (EMC) dans un rapport volumique respectivement de 1/1/3. On entend par rapport volumique 1/1/3 un mélange de solvants organiques, non aqueux, contenant 20% volumique de propylène carbonate, 20% volumique de γ-butyrolactone et 60% volumique d'éthyle méthyle carbonate. Le rapport volumique de chaque solvant organique dans le mélange permet d'améliorer les qualités conductrices, de solvatation du sel de lithium et de tenue à basse température de l'électrolyte liquide.

Un tel mélange de solvants est, plus particulièrement, utilisé pour dissoudre au moins un sel de lithium, de préférence, choisi parmi l'hexafluorophosphate de lithium (LiPF₆), le tétrafluoroborate de lithium (LiBF₄), le bis (trifluorométhylsulfonyl) imidure de lithium (LiTFSI), le triflate de lithium (LiTf), le bis(perfluoroéthanesulfonyl)imidure de lithium (LiBeTi) et leurs mélanges. Le sel de lithium est sélectionné en fonction de la mobilité du cation Li⁺, la capacité du sel à se dissocier dans un solvant organique, la stabilité et la toxicité du sel de lithium, dans la gamme de température de fonctionnement de l'accumulateur au lithium choisi. Ainsi, on évitera l'hexafluoroarséniate de lithium (LiAsF₆), considéré comme un sel de lithium trop instable thermiquement et toxique.

Pour permettre d'obtenir une dissociation optimale des ions constituant le sel de lithium dans le mélange de solvants organiques décrit ci-dessus et favoriser ainsi le transfert des ions solvatés, en particulier du cation Li⁺, on choisira avantageusement une concentration en sel de lithium comprise entre 0,1 mol.L⁻¹ et 6 mol.L⁻¹, de préférence, égale à 1 mol.L⁻¹ ± 0,2.

Il a été trouvé que la formulation particulière de l'électrolyte tel que décrit ci-dessus présente des propriétés physiques et chimiques particulièrement adaptées pour une utilisation dans un accumulateur au lithium.

En outre, le mélange de solvants organiques est particulièrement efficace en association avec un additif apte à former une couche de passivation sur une des électrodes de l'accumulateur au lithium.

En particulier, un électrolyte liquide peut comporter entre 0,5% et 5% massique de carbonate de vinylène, noté VC. L'addition de VC améliore significativement les performances de l'accumulateur au lithium, en particulier, lorsque cet accumulateur est pourvu d'une électrode en carbone graphite, notée C_{gr}. En effet, le VC forme une couche de passivation homogène stabilisant l'électrode de graphite C_{gr}, qui permet ainsi à l'accumulateur au lithium de restituer une bonne capacité spécifique.

On choisira, avantageusement, un pourcentage massique de carbonate de vinylène (VC) compris entre 0,5% et 2%, de préférence, égal à 2%.

L'électrolyte liquide est, avantageusement, utilisé pour un accumulateur au lithium à basse température. On entend par accumulateur au lithium à basse température un accumulateur pouvant fonctionner jusqu'à une température inférieure ou égale à -20°C, de préférence, inférieure ou égale à -40°C.

Par ailleurs, la formulation de l'électrolyte liquide décrit ci-dessus permet également un fonctionnement efficace jusqu'à des températures positives allant jusqu'à 70°C.

Selon un mode de réalisation particulier de l'invention, l'électrolyte est particulièrement adapté pour un accumulateur au lithium qui comporte :
- une électrode positive comprenant un matériau actif positif,
- une électrode négative comprenant un matériau actif négatif,
- et un séparateur disposé entre les électrodes positive et négative et imbibé de l'électrolyte.

Le matériau actif positif est, de préférence, choisi parmi LiFePO₄, LiNi_{0.33}Mn_{0.33}Co_{0.33}O₂, LiNiₓCo_{y}Al_{z}O₂ avec la somme des valeurs de x, y et z étant égale à 1, LiMnO₂, LiNiO₂ et LiNiₓMn_{y}O₄ avec x compris entre 0.4 et 0.5 et y compris entre 1,5 et 1,6.

Le matériau actif négatif est, de préférence, choisi parmi le carbone graphite (C_{gr}), Li₄Ti₅O₁₂, le silicium et le carbure de silicium.

Selon un mode de réalisation particulier préférentiel, le matériau actif positif est du LiFePO₄ et le matériau actif négatif est du carbone graphite (C_{gr}).

Le séparateur peut classiquement être une membrane poreuse en composite ou céramique, ou microporeuse en polymère, par exemple, à base de polyoléfine(s). Le séparateur peut également être constitué par des fibres de verre non-tissées, noyées ou non dans un polymère pour renforcer leur stabilité mécanique très faible.

Le séparateur est imprégné par l'électrolyte liquide tel que décrit ci-dessus.

L'électrolyte liquide permet de réaliser un accumulateur au lithium délivrant une puissance élevée à des régimes de courant élevés, tout en ayant une faible autodécharge dans une large gamme de température, notamment pour des températures extrêmement basse et extrêmement élevées. L'accumulateur au lithium réalisé à partir de l'électrolyte liquide selon l'invention peut ainsi fonctionner sur une largement plage de températures, de préférence, entre -20°C et +60°C, plus avantageusement, entre -40°C et +70°C. Par autodécharge, on entend l'aptitude d'un accumulateur placé à l'état chargé à se décharger, même lorsqu'il n'est pas utilisé ou «sur étagère».

À titre d'illustration, un accumulateur au lithium, noté A1, de type pile bouton est réalisé à partir du couple de matériaux actifs LiFePO₄//C_{gr} correspondant, respectivement, à l'électrode positive et l'électrode négative.

En particulier, une électrode positive LiFePO₄ est formée en déposant sur un collecteur de courant en aluminium, le mélange suivant :
- 90% massique de matériau actif LiFePO₄,
- 4% massique de noir de carbone utilisé comme matériau conducteur et,
- 6% massique de polyfluorure de vinylidène (PVdF) comme liant.

En particulier, une électrode négative Cgr est formée en déposant sur un collecteur de courant en cuivre, le mélange suivant :
- 96% massique de matériau actif constitués de 75% de matériau carbone graphite, 19-20% de fibres (Tenax) et 5-6% de noir de carbone,
- 2% massique de carboxyméthyle cellulose utilisé comme épaississant et liant d'électrodes et,
- 2% massique de nitrile butadiène rubber (NBR) utilisé comme élastomère.

L'électrolyte liquide est constitué par du sel de lithium LiPF₆ dissous dans un mélange de solvants organiques, noté m_{A1}, constitué par les solvants organiques, non aqueux, PC/GBL/EMC dans un rapport volumique 1/1/3 et 2% massique de VC. La quantité de LiPF₆ est déterminée de manière à obtenir une solution d'électrolyte liquide finale ayant une concentration en LiPF₆ de 1mol.L⁻¹.

Un séparateur de type Celgard® est imbibé par l'électrolyte liquide ainsi formé et disposé entre les électrodes positive et négative, respectivement, LiFePO₄//C_{gr}.

À titre de comparaison, un accumulateur au lithium, appelée B1, qui diffère de l'accumulateur au lithium A1 uniquement par la formulation du mélange de solvants organiques, noté m_{B1}, utilisé pour l'électrolyte liquide, a également été réalisé. L'électrolyte liquide employé pour l'accumulateur B1 est une solution commerciale d'électrolyte EC/PC/DMC 1 M LiPF₆ de NOVOLYTE, comprenant le mélange m_{B1} constitué par du carbonate d'éthylène (EC), du propylène carbonate (PC) et du carbonate de diméthyle (DMC), dans un rapport volumique 1/1/3.

Un test en cyclage sur banc ARBIN BT2000 de la société Arbin Instruments est réalisé sur chaque accumulateur au lithium A1 et B1, en régime C/20/- D/20, à la température de -40°C.

Les résultats des accumulateurs au lithium A1 et B1 sont représentés, respectivement, aux figures 1 et 2.

Comme représenté à la figure 1, l'accumulateur au lithium A1 fonctionne à une température très basse de -40°C. En revanche, la courbe illustrée à la figure 2 montre clairement que l'accumulateur au lithium B1 ne donne aucun résultat à une température de -40°C. La pile bouton B1 obtenue à partir de la solution commerciale d'électrolyte liquide de la société NOVOLYTE (EC/PC/DMC avec un rapport volumique 1/1/3 + 2% massique de VC + 1mol.L⁻¹ de LiPF₆) ne fonctionne pas quelque soit le régime appliqué, même en régime lent.

D'autres formulations d'électrolytes liquides ont été testés dans les mêmes conditions. Les formulations de l'électrolyte liquide, en particulier, la nature des solvants du mélange, leur rapport volumique dans ledit mélange, noté R, les autres constituants dudit électrolyte et les résultats obtenus pour chaque accumulateur référencé à une température de -40°C sont répertoriées dans le tableau 1 suivant.

**Tableau 1**

| Référence | Formulation de l'électrolyte liquide | | | Fonctionnement Oui/ non (O/N) |
|---|---|---|---|---|
| | Solvants organiques | R | Autres constituants | |
| TES | EC/DMC/DEC | 1/1/3 | 1 M LiPF6 | N |
| TRIADE1 | EC/DEC/DMC/EMC | 1/1/1/3 | 5%vol VEC⁸ + 1 M LiPF6 | N |
| TRIADE2 | EC/DEC/DMC/EMC | 1/1/1/3 | 1 M LiPF6 | N |
| eBT4 | EC/DEC/AN | 1/2/1 | 1 M LiPF6 | N |
| eBT5 | EC/DEC/AN | 1/3/1 | 1 M LiPF6 | N |
| eBT6 | PC/DEC/EA¹ | 1/1/1 | 1 M LiPF6 | N |
| eBT7 | PC/DEC/EA | 1/1/3 | 1 M LiPF6 | N |
| eBT8 | PC/DEC/VA² | 1/1/1 | 1 M LiPF6 | N |
| eBT9 | PC/DEC/VA² | 1/1/3 | 1 M LiPF6 | N |
| eBT10 | EC/DEC/EMC | 1/1/3 | 1 M LiPF6 | N |
| eBT11 | PC/DEC/MA³ | 1/1/1 | 1 M LiPF6 | N |
| eBT12 | PC/DEC/MA³ | 1/1/3 | 1 M LiPF6 | N |
| eBT13 | PC/DEC/PA⁴ | 1/1/1 | 1 M LiPF6 | N |
| eBT14 | PC/DEC/PA⁴ | 1/1/3 | 1 M LiPF6 | N |
| eBT15 | PC/DEE | 1/1 | 1 M LiPF6 | N |
| **B1** | **EC/PC/DMC⁵** | 1/1/3 | 1 M LiPF6 + 2% VC | N |
| eBT17 | EC/DEC/THF/EMC | 1/1/1/3 | 1 M LiPF6 | N |

**Tableau 1**

| Référence | Formulation de l'électrolyte liquide | | | Fonctionnement Oui/ non (O/N) |
|---|---|---|---|---|
| | Solvants organiques | R | Autres constituants | |
| eBT18 | PC/DEE | 1/1 | 1 M LiPF6 + 2% VC | N |
| eBT19 | PC/DEE/THF | 1/1/1 | 1 M LiPF6 +2 %VC | N |
| eBT20 | PC/DEC/VA² | 1/1/3 | 1 M LiPF6 + 2 % VC | N |
| eBT21 | PC/DEC/MA³ | 1/1/1 | 1 M LiPF6 + 2 % VC | N |
| eBT22 | TRIADE2 | 1/1 | + **ILF2** ⁹ | N |
| eBT23 | EC/DEC/THF/EMC | 1/1/1/3 | 1 M LiPF6 | N |
| eBT24 | PC/DEE | 1/1 | 1 M LiPF6 + 2% VC | N |
| eBT25 | PC/DEE/THF | 1/1/3 | + 1 M LiPF6 +2 %VC | N |
| eBT26 | PC/DEC/VA² | 1/1/3 | 1 M LiPF6 + 2 % VC | N |
| eBT27 | PC/DEC/MA³ | 1/1/1 | 1 M LiPF6 + 2 % VC | N |
| eBT28 | TRIADE2 + HMITFSI⁶ | 1/1 | 1.6 M LiPF6 | N |
| eBT29 | EC/PC/DMC/THF/GBL | 1/1/3/2/1 | 1 M LiPF6 | N |
| eBT30 | EC/PC/DMC/THF/FR1⁷ | 1/1/3/1/1 | 1 M LiPF6 | N |
| eBT31 | EC/PC/DMC/THF/FR1⁷ | 1/1/3/2/1 | 1 M LiPF6 | N |
| eBT32 | EC/DEC/DMC/EMC/THF/GBL | 1/1/1/3/2/1 | 1 M LiPF6 | N |
| eBT33 | EC/DEC/DMC/EMC/THF/FR1⁷ | 1/1/1/3/1/1 | 1 M LiPF6 | N |
| eBT34 | EC/DEC/DMC/EMC/THF | 1/1/1/3/1/1.5 | 1 M LiPF6 | N |
| **A3** | **PC/GBL/EMC** | **1/1/1** | **2% VC + 1 M LiPF6** | **O** |
| **A2** | **PC/GBL/EMC** | **1/1/2** | **2% VC + 1 M LiPF6** | **O** |
| **A3** | **PC/GBL/EMC** | **1/1/3** | **2% VC + 1 M LiPF6** | **O** |

| | | | | |
|---|---|---|---|---|
| ¹ EA = acétate d'éthyle ; ² VA = acétate de vinyle ; ³ MA = acétate de méthyle ; ⁴ PA = acétate de propyle ; ⁵ solution d'électrolyte commercialisé par la société Novolyte (ou SAFT) sous la référence LP10 ; ⁶ HMITFS = 1-hexyl-3-méthylimidazolium bis (trifluorométhanesulfonyl) imidure ; ⁷ FR1 = diméthyle méthylphosphate ; ⁸ VEC = carbonate de vinyléthylène ; ⁹ILF2 = HMITFSI + 1,6 M LiTFSI + 5%vol VEC. | | | | |

Parmi l'ensemble des formulations d'électrolyte liquide testés, seuls les électrolytes A1, A2 et A3 ont permis d'avoir des résultats à une température égale à -40°C. On note en particulier que l'utilisation d'un ester linéaire asymétrique tel que le EMC intervient sur la stabilité de l'électrolyte liquide à basse température. En effet, le fait que l'EMC porte des groupements différents de part et d'autre de la fonction ester améliore significativement et de façon surprenante la stabilité de l'électrolyte liquide à basse température.

Afin de mettre en évidence, les effets du rapport volumique de chaque constituant du mélange ternaire de solvants organiques de l'électrolyte liquide selon l'invention, trois accumulateurs au lithium de type pile bouton, notés A1, A2, A3 ont été testés en cyclage. Les deux accumulateurs A2 et A3 sont identiques à l'accumulateur au lithium A1, à l'exception du rapport volumique de chaque constituant du mélange ternaire PC/GBL/EMC de solvants organiques, notés respectivement m_{A2} et m_{A3}.

Les mélanges m_{A1}, m_{A2} et m_{A3} sont tous constitués uniquement de PC, GBL et EMC, mais dans des proportions volumiques différentes, tel qu'indiqué dans le tableau 2 suivant :

**Tableau 2**

| | **m_{A1}** | **m_{A2}** | **m_{A3}** |
|---|---|---|---|
| **Rapport volumique dans le mélange ternaire PC/ GBL/ EMC** | 1/ 1/ 3 | 1/ 1/ 2 | 1/ 1/ 1 |

Un même test en cyclage a été réalisé sur les trois accumulateurs au lithium A 1, A2 et A3.

Le test en cyclage consiste à appliquer le protocole de cyclage suivant :
- 2 cycles de formation en régime C/20/-D/20, à température ambiante,
- 5 cycles de charge et de décharge en régime C/20/-D/20, à la température de -40°C,
- 100 cycles de charge et de décharge en régime C/10/-D/10, à la température de -40°C.

Les résultats obtenus pour les accumulateurs au lithium A1, A2 et A3 sont représentés à la figure 3, sous forme de trois courbes représentant, respectivement, les capacités spécifiques des accumulateurs A1, A2 et A3 en fonction du nombre de cycle, à une température de cyclage de -40°C.

Les moyennes des capacités spécifiques récupérées et les valeurs du rapport de la capacité spécifique moyenne sur la capacité théorique attendue sont répertoriées dans le tableau 3 suivant :

**Tableau 3**

| Accumulateur au lithium | Capacité spécifique moyenne (mAh.g⁻¹) | Capacité spécifique moyenne / capacité théorique (en %) |
|---|---|---|
| A1 | 107,1 | 76,5 % |
| A2 | 83.3 | 59,5 % |
| A3 | 73.9 | 52,8 % |

Les résultats répertoriés dans le tableau 3 précédent, montrent clairement des résultats nettement supérieurs pour l'accumulateur au lithium A1 comparativement aux deux autres accumulateurs A2 et A3. Le rapport volumique sélectionné 1/1/3 entre les trois constituants respectifs PC/GBL/EMC de l'électrolyte liquide permet d'obtenir de façon surprenante des capacités spécifiques récupérées nettement supérieures aux deux autres mélanges m_{A2} et m_{A3}.

L'électrolyte liquide selon l'invention n'est pas limité aux modes particuliers de réalisation exposés ci-dessus. Compte tenu de la grande stabilité électrochimique à haut et bas potentiels vs Li/Li⁺ de l'électrolyte liquide selon l'invention, ce dernier peut être envisagé pour être utiliser avec d'autres couples de matériaux actifs que LiFePO₄ et C_{gr}. En outre, l'électrolyte liquide selon l'invention peut être dépourvu de VC.

L'électrolyte liquide selon l'invention présente également de bonnes conductivité ionique, viscosité et stabilité chimique, sur une large gamme de températures. Par ailleurs, l'électrolyte liquide est inerte vis-à-vis de la plupart des électrodes couramment employées dans le domaine des accumulateurs au lithium conventionnels.

L'accumulateur au lithium comportant un électrolyte liquide selon l'invention est remarquable en ce qu'il présente une tenue à basse température améliorée tout en maintenant une capacité spécifique élevée à température ambiante.

## Revendications

1. Electrolyte liquide pour accumulateur au lithium comprenant au moins un sel de lithium dissous dans un mélange de solvants organiques non aqueux,
**caractérisé en ce que** le mélange de solvants organiques contient entre :
- 0,5% et 33% volumique de propylène carbonate (PC),
- 0,5% et 33% volumique de γ-butyrolactone (GBL) et,
- 0,5% et 99% volumique d'éthyle méthyle carbonate (EMC),
la somme des pourcentages volumiques respectifs de propylène carbonate, γ-butyrolactone et éthyle méthyle carbonate dans le mélange étant égale à 100%.

2. Electrolyte selon la revendication 1, **caractérisé en ce que** le mélange de solvants organiques est constitué par du propylène carbonate (PC), de γ-butyrolactone (GBL) et de l'éthyle méthyle carbonate (EMC) dans un rapport volumique, respectivement, de 1/1/3.

3. Electrolyte selon l'une quelconque des revendications 1 à 2, **caractérisé en ce que** le sel de lithium est choisi parmi l'hexafluorophosphate de lithium (LiPF₆), le tétrafluoroborate de lithium (LiBF₄), le bis (trifluorométhylsulfonyl) imidure de lithium (LiTFSI), le triflate de lithium (LiTf), le bis-(perfluoroéthanesulfonyl)imidure de lithium (LiBeTi) et leurs mélanges.

4. Electrolyte selon l'une quelconque des revendications 1 à 3, **caractérisé en ce que** le sel de lithium a une concentration comprise entre 0,1 mol.L⁻¹ et 6 mol.L⁻¹, de préférence, égale à 1 mol.L⁻¹ ± 0,2.

5. Electrolyte selon l'une quelconque des revendications 1 à 4, **caractérisé en ce qu'**il comporte entre 0,5% et 5% massique de carbonate de vinylène (VC).

6. Electrolyte selon la revendication 5, **caractérisé en ce que** le pourcentage massique de carbonate de vinylène (VC) est compris entre 0,5% et 2%, de préférence, égal à 2%.

7. Utilisation d'un électrolyte liquide selon l'une quelconque des revendications 1 à 6, dans un accumulateur au lithium à basse température.

8. Utilisation selon la revendication 7, **caractérisée en ce que** l'accumulateur au lithium comporte :
- une électrode positive comprenant un matériau actif positif,
- une électrode négative comprenant un matériau actif négatif,
- et un séparateur disposé entre les électrodes positive et négative et imbibé de l'électrolyte.

9. Utilisation selon l'une des revendications 7 et 8, **caractérisée en ce que** le matériau actif positif est choisi parmi LiFePO₄, LiNi_{0.33}Mn_{0.33}Co_{0.33}O₂, LiNiₓCo_{y}Al_{z}O₂ avec la somme des valeurs de x, y et z étant égale à 1, LiMnO₂, LiNiO₂ et LiNiₓMn_{y}O₄ avec x compris entre 0.4 et 0.5 et y compris entre 1,5 et 1,6.

10. Utilisation selon l'une quelconque des revendications 7 à 9, **caractérisée en ce que** le matériau actif négatif est choisi parmi le carbone graphite (C_{gr}), Li₄Ti₅O₁₂, le silicium et le carbure de silicium.

11. Utilisation selon l'une des revendications 9 et 10, **caractérisée en ce que** le matériau actif positif est du LiFePO₄ et le matériau actif négatif est du carbone graphite (C_{gr}).

## Patentansprüche

1. Flüssiger Elektrolyt für eine Lithiumbatterie, mit mindestens einem Lithiumsalz, das in einer Mischung aus nicht wässrigen, organischen Lösungsmitteln aufgelöst ist,
**dadurch gekennzeichnet, dass** die Mischung aus organischen Lösungsmitteln zwischen:
- 0,5 und 33 Vol.-% Propylenkarbonat (PC),
- 0,5 und 33 Vol.-% γ-Butyrolacton (GBL) sowie
- 0,5 und 99 Vol.-% Ethyl-Methyl-Karbonat (EMC) enthält,
wobei die Summe der jeweiligen Volumenprozentangaben von Propylenkarbonat, γ-Butyrolacton und Ethyl-Methyl-Karbonat in der Mischung gleich 100% ist.

2. Elektrolyt gemäß Anspruch 1, **dadurch gekennzeichnet, dass** die Mischung aus organischen Lösungsmitteln aus Propylenkarbonat (PC), γ-Butyrolacton (GBL) und Ethyl-Methyl-Karbonat (EMC) jeweils in einem Volumenverhältnis von 1/1/3 zusammengesetzt ist.

3. Elektrolyt gemäß einem der Ansprüche 1 bis 2, **dadurch gekennzeichnet, dass** das Lithiumsalz aus Lithium-Hexafluorphosphat (LiPF₆), Lithium-Tetrafluorborat (LiBF₄), Lithium-bis(Trifluormethylsulfonyl)Imid (LiTFSI), Lithiumtriflat (LiTf), Lithium-bis(Perfluorethansulfonyl)Imid (LiBeTi) und deren Mischungen ausgewählt ist.

4. Elektrolyt gemäß einem der Ansprüche 1 bis 3, **dadurch gekennzeichnet, dass** das Lithiumsalz eine Konzentration zwischen 0,1 mol.L⁻¹ und 6 mol.L⁻¹, vorzugsweise gleich 1 mol.L⁻¹ ± 0,2 aufweist.

5. Elektrolyt gemäß einem der Ansprüche 1 bis 4, **dadurch gekennzeichnet, dass** er zwischen 0,5 und 5 Masse-% Vinylencarbonat (VC) enthält.

6. Elektrolyt gemäß Anspruch 5, **dadurch gekennzeichnet, dass** der Masseprozentgehalt von Vinylencarbonat (VC) zwischen 0,5% und 2%, vorzugsweise gleich 2% beträgt.

7. Verwendung eines flüssigen Elektrolyten gemäß einem der Ansprüche 1 bis 6 in einer Lithiumbatterie bei niedriger Temperatur.

8. Verwendung gemäß Anspruch 7, **dadurch gekennzeichnet, dass** die Lithiumbatterie Folgendes aufweist:
- eine positive Elektrode mit einem positiven aktiven Material,
- eine negative Elektrode mit einem negativen aktiven Material,
- eine zwischen der positiven und negativen Elektrode angeordnete und mit dem Elektrolyten getränkte Trennschicht.

9. Verwendung gemäß einem der Ansprüche 7 und 8, **dadurch gekennzeichnet, dass** das positive aktive Material ausgewählt ist aus LiFePO₄, LiNi_{0,33}Mn_{0,33}Co_{0,33}O₂, LiNiₓCo_{y}Al_{z}O₂, wobei die Summe der Werte von x, y und z gleich 1 ist, LiMnO₂, LiNiO₂ und LiNiₓMn_{y}O₄, wobei x zwischen 0,4 und 0,5 liegt und y zwischen 1,5 und 1,6 liegt.

10. Verwendung gemäß einem der Ansprüche 7 bis 9, **dadurch gekennzeichnet, dass** das negative aktive Material aus Graphitkohlenstoff (C_{gr}), Li₄Ti₅O₁₂, Silizium und Siliziumkarbid ausgewählt ist.

11. Verwendung gemäß einem der Ansprüche 9 und 10, **dadurch gekennzeichnet, dass** das positive aktive Material aus LiFePO₄ besteht und das negative aktive Material aus Graphitkohlenstoff (C_{gr}) besteht.

## Claims

1. A liquid electrolyte for a lithium accumulator comprising at least one lithium salt dissolved in a mixture of non-aqueous organic solvents, **characterized in that** the mixture of organic solvents contains between:
- 0.5% and 33% in volume of propylene carbonate (PC),
- 0.5% and 33% in volume of γ-butyrolactone (GBL) and,
- 0.5% and 99% in volume of ethyl methyl carbonate (EMC),
the sum of the respective volume percentages of propylene carbonate, γ-butyrolactone and ethyl methyl carbonate in the mixture being equal to 100%.

2. The electrolyte according to claim 1, **characterized in that** the mixture of organic solvents is formed by propylene carbonate (PC), γ-butyrolactone (GBL) and ethyl methyl carbonate (EMC) in a volume ratio respectively of 1/1/3.

3. The electrolyte according to either one of claims 1 or 2, **characterized in that** the lithium salt is chosen from lithium hexafluorophosphate (LiPF₆), lithium tetrafluoroborate (LiBF₄), lithium bis (trifluoromethylsulfonyl) imide (LiTFSI), lithium triflate (LiTf), lithium bis-(perfluoroethanesulfonyle)-imide (LiBeTi) and mixtures of the latter.

4. The electrolyte according to any one of claims 1 to 3, **characterized in that** the lithium salt has a concentration comprised between 0.1 mol.L⁻¹ and 6 mol.L⁻¹, preferably equal to 1 mol.L⁻¹ ± 0.2.

5. The electrolyte according to any one of claims 1 to 4, **characterized in that** it comprises between 0.5% and 5% by mass of vinylene carbonate (VC).

6. The electrolyte according to claim 5, **characterized in that** the mass percentage of vinylene carbonate (VC) is comprised between 0.5% and 2%, preferably equal to 2%.

7. The use of a liquid electrolyte according to any one of claims 1 to 6, in a low-temperature lithium accumulator.

8. The use according to claim 7, **characterized in that** the lithium accumulator comprises:
- a positive electrode comprising a positive active material,
- a negative electrode comprising a negative active material,
- and a separator arranged between the positive and negative electrodes and imbibed with the electrolyte.

9. The use according to one of claims 7 and 8, **characterized in that** the positive active material is chosen from LiFePO₄, LiNi_{0.33}Mn_{0.33}Co_{0.33}O₂, LiNiₓCo_{y}Al_{z}O₂ with the sum of the values of x, y and z being equal to 1, LiMnO₂, LiNiO₂ and LiNiₓMn_{y}O₄ with x comprised between 0.4 and 0.5 and y comprised between 1.5 and 1.6.

10. The use according to any one of claims 7 to 9, **characterized in that** the negative active material is chosen from carbon graphite (C_{gr}), Li₄Ti₅O₁₂, silicon and silicon carbide.

11. The use according to one of claims 9 and 10, **characterized in that** the positive active material is LiFePO₄ and the negative active material is carbon graphite (C_{gr}).
